# EUROPÄISCHE PATENTSCHRIFT

(11) **EP 1 245 007 B1**
(45) Veröffentlichungstag und Bekanntmachung des Hinweises auf die Patenterteilung: **27.10.2004**
(21) Anmeldenummer: 00983198.3
(22) Anmeldetag: 30.11.2000
(51) Int. Cl.: G07D 7/12

(54) **VORRICHTUNG UND VERFAHREN ZUR ECHTHEITSPRÜFUNG VON BANKNOTEN**
DEVICE AND METHOD FOR VERIFYING THE AUTHENTICITY OF BANKNOTES
PROCEDE ET DISPOSITIF POUR VERIFIER L'AUTHENTICITE DE BILLETS DE BANQUE

(30) Priorität: 03.12.1999 DE 19958048
(43) Veröffentlichungstag der Anmeldung: 02.10.2002
(73) Patentinhaber: Giesecke & Devrient GmbH, 81677 München (DE)
(72) Erfinder: THIERAUF, Klaus, 81825 München (DE); Schütt, Lothar, 85221 Dachau (DE)
(74) Vertreter: Höhfeld, Jochen
(86) Internationale Anmeldenummer: PCT/EP2000/012055
(87) Internationale Veröffentlichungsnummer: WO 2001/041079

(56) Entgegenhaltungen:
- EP-A- 0 543 058
- EP-A- 0 935 223
- WO-A-99/09382
- DE-A- 19 651 101
- GB-A- 2 334 574
- US-A- 5 640 463

## Beschreibung

Die Erfindung betrifft eine Vorrichtung sowie ein Verfahren zur Echtheitsprüfung von Banknoten gemäß dem Oberbegriff des Anspruchs 1 bzw. 14.

Gefälschte Banknoten werden meist auf handelsüblichem Papier gedruckt, welches optische Aufheller enthält. Demgegenüber ist das Papier echter Banknoten im allgemeinen frei von optischen Aufhellern. Der Nachweis optischer Aufheller in einer Banknote kann somit als Indiz für das Vorliegen einer Fälschung dienen. Der Nachweis von optischen Aufhellen erfolgt in der Regel durch Bestrahlung der zu überprüfenden Banknote mit ultraviolettem (UV) Licht. Eine gefälschte, auf aufhellerhaltigem Papier gedruckte Banknote kann daran erkannt werden, daß diese im bestrahlten Bereich sichtbare Fluoreszenz zeigt.

Bei den in der Patentschrift US 5,640,463 beschriebenen Vorrichtungen und Verfahren zur Echtheitsprüfung von Banknoten werden die zu überprüfenden Banknoten mit Licht aus einer UV-Lichtquelle beleuchtet und sowohl das von der zu überprüfenden Banknote reflektierte UV-Licht als auch das von dieser emittierte Fluoreszenzlicht gemessen und mit den an einer echten Banknote gemessenen Werten verglichen. Als UV-Lichtquelle dient eine Leuchtstofflampe.

Der Einsatz von Leuchtstofflampen hat jedoch verschiedene Nachteile. Insbesondere läßt sich ein kompakter Aufbau einer entsprechenden Vorrichtung kaum realisieren, da durch die Form und Größe handelsüblicher Leuchtstofflampen, z.B. stabförmig mit einer typischen Länge von etwa 5 cm, eine Mindestgröße der gesamten Vorrichtung vorgegeben ist. Darüber hinaus weist das von Leuchtstofflampen emittierte Licht neben UV-Anteilen zusätzlich Anteile im sichtbaren und infraroten Spektralbereich auf. Dies kann zu einer unerwünschten Erwärmung der Vorrichtung führen. Daher ist in vielen Fällen eine geeignete Kühlung der Vorrichtung erforderlich. Nicht zuletzt wird zum Betrieb von UV-Leuchtstofflampen Hochspannung benötigt, was einen zusätzlichen Aufwand gegenüber der in vielen Transport- oder Prüfeinrichtungen in Banknotenbearbeitungsmaschinen typischerweise eingesetzten Niederspannungsversorgung erfordert und außerdem das Auftreten von Störspannungen begünstigt.

In den bekannten Verfahren zur Echtheitsprüfung nach dem Stand der Technik erfolgt die Kompensation von Meßungenauigkeiten, wie z.B. durch Alterung, Verschmutzung oder Umgebungslicht, durch wiederholte Referenzmessungen an Referenzbelegen, z.B. echten und ggf. neuen Banknoten. Dies ist jedoch umständlich und zeitaufwendig, da für die Durchführung einer Referenzmessung der eigentliche Prüfvorgang jedesmal unterbrochen werden muß, damit die entsprechenden Referenzbelege eingegeben werden können. Aufgrund dieses Urnstands können Referenzmessungen nur in längeren zeitlichen Abständen erfolgen, z.B. nach einer größeren Anzahl geprüfter Banknoten, da ansonsten die Echtheitsprüfung insgesamt zu zeitintensiv würde. Zeitlich veränderliche Einflüsse, z.B. durch Umgebungslicht und Dunkelstrom in den Detektoren, können dadurch nur bedingt berücksichtigt werden.

Aus der deutschen Offenlegungsschrift DE 196 51 101 A1 ist ein Verfahren zur Detektion von fluoreszent und phosphoreszent emittiertem Licht von Banknoten bekannt. Die Banknoten werden mit einem getakteten Anregungslicht, welches von einer Leuchtstofflampe oder einer Gasentladungslampe emittiert wird, beleuchtet. Aus den jeweils in der Hellphase und in der Dunkelphase des Anregungslichts detektierten Intensitäten wird eine Intensität des fluoreszent emittierten Lichts und eine Intensität des phosphoreszent emittieren Lichts abgeleitet. Die Intensität des fluoreszent emittierten Lichts wird hierbei als Differenz der Intensität in der Hellphase und der Intensität in der Dunkelphase, welche der Intensität des phosphoreszent emittierten Lichts entspricht, abgeleitet. Durch die Anregung des Fluoreszenz- bzw. Phosphoreszenzlichts mittels einer Leuchtstoff- oder Gasentladungslampe ist jedoch ein präzises Takten des Anregungslichts, d.h. ein schnelles Ein- und Ausschalten ohne zu langes Nachleuchten der Anregungslichtquelle, nicht oder nur unter hohem schaltungstechnischen Aufwand möglich. Hierdurch kann es, insbesondere bei kürzeren Taktzeiten, zu einer Verfälschung der gemessenen und der daraus abgeleiteten Intensitäten kommen.

Es ist Aufgabe der vorliegenden Erfindung, eine Vorrichtung zur Echtheitsprüfung anzugeben, welche kompakt aufgebaut ist sowie einen einfachen und sicheren Betrieb erlaubt.

Die Aufgabe wird erfindungsgemäß durch die Vorrichtung und das Verfahren entsprechend Anspruch 1 bzw. 14 gelöst.

Die erfindungsgemäße Vorrichtung bildet hierbei den Stand der Technik dahingehend weiter, daß als Lichtquelle eine Leuchtdiode eingesetzt wird und die Leuchtdiode zur Emission von Licht ausgebildet ist, welches zumindest in einem spektralen Teilbereich ultraviolettes Licht enthält. Da Leuchtdioden im allgemeinen deutlich kleinere Bauteilgrößen aufweisen als die bisher eingesetzten UV-Leuchtstofflampen, wird ein kompakter Aufbau der erfindungsgemäßen Vorrichtung ermöglicht. Auf diese Weise läßt sich eine, insbesondere bei Banknotenbearbeitungsmaschinen geringer Baugröße erforderliche, platzsparende Anordnung mehrerer verschiedener Sensoren auf engstem Raum realisieren. Darüber hinaus sind Leuchtdioden kostengünstiger als die bisher eingesetzten UV-Leuchtstofflampen. Die maximale Betriebsdauer der vorgesehenen Leuchtdioden ist außerdem im allgemeinen deutlich länger als bei UV-Leuchtstofflampen. So müssen UV-Leuchtstofflampen nach einer maximalen Betriebsdauer von typischerweise weniger als 3000 Stunden ausgewechselt werden, wohingegen die erfindungsgemäß vorgesehenen Leuchtdioden wesentlich längere maximale Betriebsdauern aufweisen. Im Gegensatz zu UV-Leuchtstofflampen können Leuchtdioden außerdem ohne einen zusätzlichen besonderen Schaltungsaufwand schnell ein- und ausgeschaltet werden. Bei ihrem Einsatz zur Echtheitsprüfung von Banknoten können die Leuchtdioden daher getaktet betrieben oder auch kurzfristig abgeschaltet werden, falls beispielsweise der Prüfvorgang einer Banknote abgeschlossen ist und die nächste zu überprüfende Banknote noch nicht zur Verfügung steht oder die Banknotenbearbeitungsmaschine kurzfristig angehalten wird, z.B. zur Behebung eines Staus. Durch vorübergehendes Abschalten der Leuchtdiode während des Betriebs wird deren maximale Betriebsdauer gegenüber UV-Leuchtstofflampen weiter erhöht. Weiterhin weist das Emissionsspektrum der vorgesehenen Leuchtdioden im Vergleich zu den bisher eingesetzten UV-Leuchtstofflampen nur sehr geringe oder keine Infrarotlicht-Anteile auf. Eine unerwünschte Erwärmung der Vorrichtung kann hierdurch vermieden werden. Dies ist insbesondere der Fall, wenn eine Leuchtdiode eingesetzt wird, deren Emissionsspektrum ein Maximum im ultravioletten Spektralbereich aufweist.

Dabei ist vorgesehen, daß die Korrektur des bei eingeschalteter Beleuchtung erzeugten ersten Meßwertes mit dem bei abgeschalteter Beleuchtung erzeugten zweiten Meßwert durch eine Lock-In-Verstärkung eines vom Fluoreszenzdetektors erzeugten Ausgangssignals erfolgt Das Ein- und Abschalten der Leuchtdiode erfolgt hierbei periodisch durch eine geeignete Spannungsquelle, z.B. einen Frequenzgenerator. Auf diese Weise können selbst geringe Intensitäten des von der Banknote emittierten und vom Fluoreszenzdetektor detektierten Fluoreszenzlichts nachgewiesen werden. Dies ist insbesondere dann von Bedeutung, wenn eine zu überprüfende, gefälschte Banknote nur geringe Spuren an optischen Aufhellern enthält und das von ihr emittierte Fluoreszenzlicht folglich nur eine geringe Intensität aufweist. Eine Lock-In-Verstärkung des Ausgangssignals ist auch dann von Vorteil, wenn die Intensität des von der Lichtquelle emittierten Lichts im Verlauf der Betriebsdauer schwächer wird und die angeregte Fluoreszenz in der Banknote entsprechend schwach ist.

Eine bevorzugte Weiterbildung der Erfindung sieht vor, daß zusätzlich zu dem Fluoreszenzdetektor ein Monitordetektor vorgesehen ist, welcher zur Detektion zumindest eines Teils des von der Leuchtdiode emittierten Lichts vorgesehen ist Der Monitordetektor mißt hierbei die Lichtintensität der Leuchtdiode im Verlauf deren Betriebsdauer und liefert Meßwerte, die zur Korrektur von Alterungseffekten, insbesondere dem bei den vorgesehenen Leuchtdioden zu beobachtenden Intensitätsrückgang, herangezogen werden.

In einer weiteren bevorzugten Ausgestaltung der erfindungsgemäßen Vorrichtung ist ein Lock-In-Verstärker zur Verstärkung von Ausgangssignalen des Fluoreszenzdetektors und/oder Monitordetektors vorgesehen. Lock-In-Verstärker werden bei der Messung und Verarbeitung sehr schwacher Analogsignale eingesetzt, wöbei der Signalhintergrund sehr stark unterdrückt wird. Bei einem Lock-In-Verstärker wird das modulierte Ausgangssignal eines Detektors verstärkt und mit einem normierten Referenzsignal derselben Modulationsfrequenz in einem Synchrondemodulator demoduliert. In einem Tiefpaßfilter werden anschließend die hochfrequenten Anteile herausgefiltert. Als Ergebnis erhält man ein Signal, welches proportional ist zur Amplitude des verstärkten emittierten Fluoreszenzlichts bzw. des reflektierten Anregungslichts. Da sich der Einsatz eines Lock-In-Verstärkers insbesondere zur Verstärkung sehr schwacher Ausgangssignale des Fluoreszenz- bzw. Monitordetektors eignet, kann hiermit sehr schwaches Fluoreszenzlicht bzw. von der Lichtquelle emittiertes Licht mit hoher Genauigkeit gemessen werden. Dies ist besonders dann von Vorteil, wenn die Intensität der Lichtquelle im Verlauf ihrer Betriebsdauer abnimmt und infolgedessen das in der zu überprüfenden Banknote angeregte Fluoreszenzlicht schwächer wird. Die Eigenschaft, schwache Ausgangssignale zu verstärken, spielt auch besonders dann eine wichtige Rolle, wenn die eingesetzte Leuchtdiode ein Emissionsspektrum mit nur geringen spektralen Anteilen im ultravioletten Spektralbereich aufweist. Dies kann beispielsweise der Fall sein, wenn anstelle einer UV-Leuchtdiode eine hauptsächlich im sichtbaren Spektralbereich emittierende Leuchtdiode verwendet wird, welche im ultravioletten Spektralbereich nur wenig Licht emittiert.

Das erfindungsgemäße Verfahren ist im wesentlichen wie folgt charakterisiert: Ein Teilbereich der zu überprüfenden Banknote wird mit dem Licht der Leuchtdiode beleuchtet. Mit dem Fluoreszenzdetektor wird das von dem Teilbereich ausgehende Fluoreszenzlicht gemessen und es wird ein erster Meßwert erzeugt. Zusätzlich wird mit dem Fluoreszenzdetektor bei abgeschalteter Leuchtdiode gemessen und ein zweiter Meßwert erzeugt. Der erste Meßwert wird dann mit dem zweiten Meßwert korrigiert, z.B. durch Subtraktion, und der so korrigierte Meßwert mit einem vordefinierten Schwellenwert verglichen. Die Messung bei abgeschalteter Leuchtdiode kann hierbei im allgemeinen auch vor der Messung bei eingeschalteter Leuchtdiode erfolgen.

Mit diesem Verfahren läßt sich eine etwaige Verfälschung des zu detektierenden Fluoreszenzlichts durch Umgebungslicht auf einfache Weise eliminieren, da keine Messung an Referenzbelegen erforderlich ist, sondern lediglich eine durch Abschalten der Leuchtdiode einfach zu realisierende "Dunkelmessung" durchgeführt wird. Insbesondere ist es hierdurch möglich, vor bzw. nach jeder eigentlichen Fluoreszenzmessung eine "Dunkelmessung" durchzuführen, ohne daß sich der operative Aufwand erhöhen würde. Unter Umgebungslicht ist hierbei künstliches oder natürliches Raumlicht sowie Licht aus anderen Meßeinrichtungen in unmittelbarer Umgebung der Vorrichtung zu verstehen. Das Umgebungslicht kann hierbei direkt oder auch indirekt, z.B. durch Reflexion an optischen Komponenten oder an der Banknote, in den Detektionsbereich des Fluoreszenzdetektors gelangen. Mit dem erfindungsgemäßen Verfahren wird außerdem eine Verfälschung der Messung aufgrund von bei Photodioden typischerweise auftretenden Dunkelströmen eliminiert, welche durch den Detektor fließen, auch wenn kein Licht detektiert wird.

In einer Weiterbildung des Verfahrens ist vorgesehen, daß der korrigierte Meßwert oder der Schwellenwert mit einem Korrekturwert K korrigiert wird, welcher die Änderung der Intensität des von der Leuchtdiode emittierten Lichts im Verlauf der Betriebsdauer der Leuchtdiode berücksichtigt. Hierdurch kann der Einfluß von Intensitätsschwankungen der Leuchtdiode eliminiert werden, so daß zu jedem Zeitpunkt innerhalb der Betriebsdauer eine Intensität der Fluoreszenz der Banknote ermittelt werden kann, welche im wesentlichen unabhängig ist von Intensitätsschwankungen des die Fluoreszenz anregenden Lichts.

Ein weiterer Aspekt der Erfindung liegt darin, daß bei eingeschalteter Leuchtdiode von der Banknote emittiertes Fluoreszenzlicht und bei abgeschalteter Leuchtdiode von der Banknote emittiertes Phosphoreszenzlicht gemessen wird. Das gemessene Fluoreszenz- und Phosphoreszenzlicht der Banknote wird dann zur Echtheitsprüfung herangezogen. Die Messung erfolgt bevorzugterweise jeweils mit dem Fluoreszenzdetektor. Die Leuchtdiode wird hierbei gepulst, insbesondere durch periodische Pulse, betrieben. Diese Verfahrensvariante ist für die Echtheitsprüfung von solchen Banknoten geeignet, welche neben Fluoreszenz auch Phosphoreszenz zeigen. Bei Kenntnis der Fluoreszenz- und Phosphoreszenzeigenschaften der Banknote kann dann z.B. auf das Vorhandensein bestimmter Stoffe in der Banknote geschlossen werden. Eine solche getrennte Messung des von der Banknote emittierten Fluoreszenz- und Phosphoreszenzlichts läßt sich unter Verwendung einer Leuchtdiode als Lichtquelle sehr einfach realisieren, da sich Leuchtdioden besonders für die Erzeugung von, insbesondere kurzen, Pulsen eignen.

Im folgenden wird die Erfindung anhand von in Figuren dargestellten Ausführungsbeispielen näher erläutert. Es zeigen:
- Fig. 1: den schematischen Aufbau eines ersten Ausführungsbeispiels mit zwei Leuchtdioden und einem Fluoreszenzdetektor;
- Fig. 2: den schematischen Aufbau eines weiteren Ausführungsbeispiels mit einer Leuchtdiode, einem Fluoreszenz- sowie einem Monitordetektor;
- Fig. 3: ein Prinzipschaltbild des erfindungsgemäß vorgesehenen Lock-In-Verstärkers:

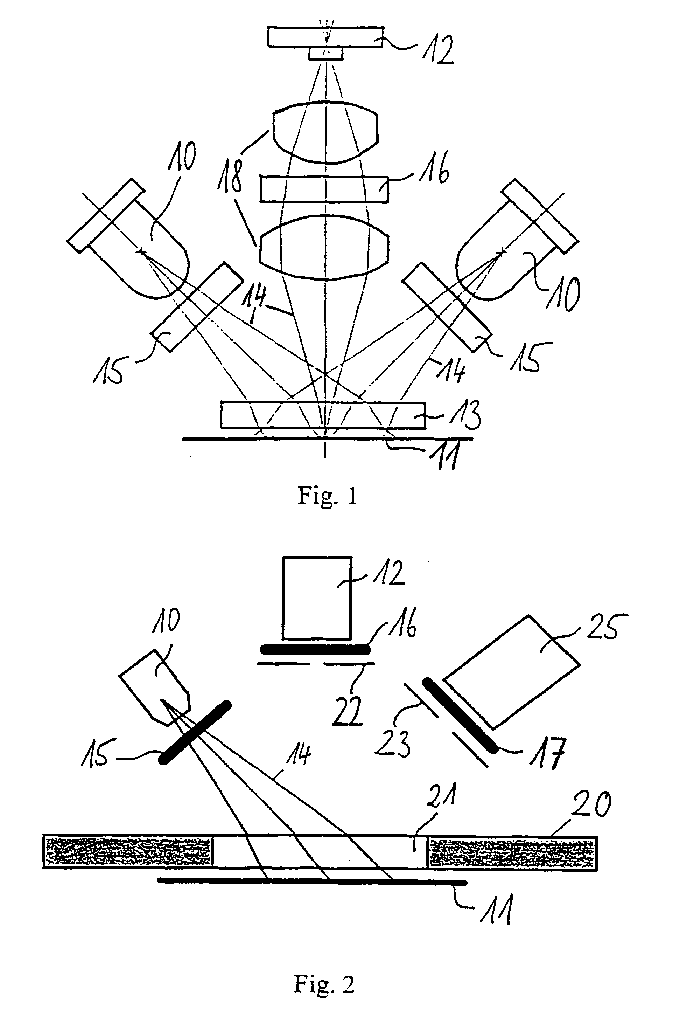

Figur 1 zeigt den schematischen Aufbau eines Ausführungsbeispiels mit zwei Leuchtdioden 10 und einem Fluoreszenzdetektor 12. Das von den Leuchtdioden 10 emittierte Licht weist ultraviolette Anteile auf, welche zur Anregung von Fluoreszenzlicht in einer zu überprüfenden Banknote 11 dienen. Hierbei kann es sich beispielsweise um Leuchtdioden handeln, welche ein Emissionsspektrum mit einem Maximum im ultravioletten Spektralbereich aufweisen. Das Emissionsmaximum typischer Leuchtdioden liegt bei etwa 370 nm und weist eine Halbwertsbreite von etwa 12 nm auf. Alternativ hierzu ist auch möglich, daß die Leuchtdioden ein Emissionsmaximum im sichtbaren, z.B. bei etwa 430 nm, Spektralbereich aufweisen, jedoch auch ausreichend hohe Anteile an ultraviolettem Licht emittieren. In beiden Fällen, insbesondere in letzterem, kann es erforderlich sein, aus dem Emissionsspektrum der Leuchtdioden einen bestimmten Spektralbereich zur Anregung von Fluoreszenzlicht in der zu überprüfenden Banknote 11 auszuwählen. Dies geschieht durch ein vor die Leuchtdioden 10 angeordnetes erstes Filter 15. Geeignete Filter weisen typischerweise eine Kante bei 400 nm auf und sind für Licht mit größeren Wellenlängen undurchlässig.

Um zu gewährleisten, daß der Fluoreszenzdetektor 12 im wesentlichen das von der Banknote 11 emittierte sichtbare Fluoreszenzlicht detektiert, wird ein zweites Filter 16 mit einer geeigneten spektralen Transmissionscharakteristik vor den Fluoreszenzdetektor 12 angebracht. Ein geeignetes Filter weist typischerweise eine Kante bei etwa 400 nm auf und ist für Licht mit kleineren Wellenlängen undurchlässig.

Ein Linsensystem 18 dient zur Kollimation des von der zu überprüfenden Banknote 11 emittierten Fluoreszenzlichts auf den Fluoreszenzdetektor 12. Das Linsensystem 18 kann außerdem zur Parallelisierung des durch das zweite Filter 16 gehenden Fluoreszenzlichts dienen. Dies ist dann von Bedeutung, wenn als zweites Filter 16 ein Interferenzfilter eingesetzt wird, dadurch einen im wesentlichen parallelen Strahlengang am Interferenzfilter eine Verschiebung der Filterkante verhindert wird. Prinzipiell kann zur Kostenminimierung anstelle des Linsensystems 18 auch eine Blende (nicht dargestellt) verwendet werden.

In dem dargestellten Beispiel ist zwischen der zu überprüfenden Banknote 11 einerseits und den Leuchtdioden 10 sowie dem Fluoreszenzdetektor 12 einschließlich Filter 15 und 16 sowie Linsensystem 18 andererseits ein Fenster 13 vorgesehen, welches zumindest für Teile des Anregungslichts sowie des Fluoreszenzlichts durchlässig ist. Während des Echtheitsprüfungsvorgangs können Banknoten 11 mit einer geeigneten Transporteinrichtung parallel zum Fenster 13 transportiert werden, wobei das Fenster 13 auch als Schutz der einzelnen Komponenten der Vorrichtung vor Staub und sonstiger Verschmutzung dient.

Wie am schematisch dargestellten Strahlengang 14 zu erkennen ist, wird mit dem Licht der Leuchtdioden 10 ein nichtpunktförmiger Teilbereich der zu überprüfenden Banknote 11 beleuchtet, d.h. das Licht der Leuchtdioden 10 wird nicht auf die Banknote 11 fokussiert. Prinzipiell ist hierbei jedoch eine Konzentration des von den Leuchtdioden emittierten Lichts, beispielsweise durch konvergente Strahlenbündel (nicht dargestellt), von Vorteil, da hierdurch eine höhere Intensität des Anregungslichts auf dem beleuchteten Teilbereich der Banknote 11 erreicht wird. Gleichzeitig wird vom Fluoreszenzdetektor 12 das im beleuchteten Teilbereich der Banknote 11 angeregte Fluoreszenzlicht integral detektiert, d.h. es wird das von einer endlichen Fläche emittierte Licht gemessen. Durch die nichtfokussierende Beleuchtung der Banknote 11 sowie die integrale Detektion des Fluoreszenzlichts über eine bestimmte Fläche erfolgt eine Mittelung der Fluoreszenzeigenschaften der Banknote 11, so daß sich lokale Unregelmäßigkeiten, wie z.B. Schmutzpartikel oder Falten, weniger störend auswirken als dies bei fokussierter Beleuchtung der Fall ist. Die typischen Größen der Flächen auf der Banknote 11 liegen bei etwa 0.4 cm² für den beleuchteten Teilbereich und bei etwa 0.4 cm² für die Fläche, über welche das Fluoreszenzlicht integral detektiert wird.

In Figur 2 ist der schematische Aufbau eines weiteren Ausführungsbeispiels dargestellt. Die mit einem ersten Filter 15 versehene Leuchtdiode 10 dient zur Beleuchtung der zu überprüfenden Banknote 11, welche parallel zu einer Transportplatte 20 transportiert wird. Die Transportplatte 20 ist in diesem Beispiel opak und weist einen räumlichen Teilbereich 21 auf, welcher zumindest sowohl für spektrale Anteile des Anregungslichts als auch des von der Banknote 11 emittierten Fluoreszenzlichts durchlässig ist. Die Transportplatte 20 kann Teil eines Gehäuses sein, in welchem die gesamte Vorrichtung integriert ist, und dient somit als Schutz der einzelnen Komponenten der Vorrichtung gegen Staub und sonstige Verschmutzungen. Wie am schematisch angedeuteten Strahlengang 14 zu erkennen ist, trifft auch in diesem Beispiel das Licht der Leuchtdiode 10 unfokussiert auf die Banknote 11. Die typische Größe der Fläche dieses beleuchteten Teilbereichs auf der Banknote 11 liegt bei etwa 0.4 cm².

Beim Passieren des räumlichen Teilbereichs 21 der Transportplatte 20 wird die Banknote 11 von den ultravioletten Anteilen des von der Leuchtdiode 10 einschließlich erstem Filter 15 ausgehenden Anregungslichts beleuchtet. Bei Vorhandensein optischer Aufheller in der Banknote 11 wird hierdurch Fluoreszenz im sichtbaren Spektralbereich angeregt. Das angeregte Fluoreszenzlicht tritt durch den räumlichen Teilbereich 21 der Transportplatte 20 und trifft auf den mit einem zweiten Filter 16 versehenen Fluoreszenzdetektor 12. Zur Kollimation des von der Banknote 11 emittierten Fluoreszenzlichts befindet sich vor dem Detektor 12 eine erste Blende 22. In dieser Anordnung wird Fluoreszenzlicht über Flächen mit typischen Größen von unter 1 cm² integral detektiert.

In diesem Ausführungsbeispiel ist ein Monitordetektor 25 vorgesehen, welcher zur Messung der Helligkeit der Leuchtdiode 10 dient. Hierzu wird das von der Leuchtdiode 10 emittierte und spektral gefilterte Licht an der Transportplatte 20 und/oder an dem räumlichen Teilbereich 21 der Transportplatte 20 zumindest teilweise reflektiert und von dem Monitordetektor 25 detektiert. Prinzipiell kann ein Teil des von der Leuchtdiode 10 emittierten Lichts auch durch andere geeignete Mittel, wie z.B. Spielgel oder Lichtleitfasern, ausgekoppelt und dem Monitordetektor 25 zugeführt werden.

In einer weiteren Variante dieses Aufbaus ist vorgesehen, daß die Leuchtdiode 10, der Monitordetektor 25 und das erste Filter 15 so angeordnet sind, daß das von der Leuchtdiode 10 emittierte Licht am ersten Filter 15 teilweise reflektiert wird und zum Monitordetektor 25 gelangt. Das erste Filter 15 ist hierbei derart gegen die von der Leuchtdiode 10 kommenden Lichtstrahlen geneigt, daß die schräg auf das erste Filter 15 treffenden Lichtstrahlen dort teilweise reflektiert werden und zum Monitordetektor 25 gelangen können. Der Monitordetektor 25 ist vorzugsweise zwischen Leuchtdiode 10 und Fluoreszenzdetektor 12 angeordnet (nicht dargestellt). Diese Variante hat den Vorteil, daß das vom ersten Filter 15 reflektierte und auf den Monitordetektor 25 treffende Licht nicht durch Streulichtanteile von der Banknote 11 oder von einem gegebenenfalls verschmutzten Teilbereich 21 der Transportplatte 20 überlagert und damit verfälscht wird. Durch eine Vergütung der der Leuchtdiode 10 zugewandten Seite des ersten Filters 15 lassen sich darüber hinaus Reflexionen an dieser Seite des Filters verhindern, wodurch nur noch die der Leuchtdiode 10 abgewandte Seite des ersten Filters 15 reflektiert. Auf diese Weise werden zusätzlich Änderungen im Transmissionsverhalten des ersten Filters 15 berücksichtigt: Nimmt z.B. die Transmission des Filters ab, so verringert sich die auf die Banknote 11 treffende Intensität des UV-Lichts, entsprechend geringer ist dann auch der Anteil des auf den Monitordetektor 25 treffenden reflektierten Lichts.

Zur Strahlkollimation ist in dem gezeigten Beispiel eine zweite Blende 23 vorgesehen, zur spektralen Filterung dient ein vor dem Monitordetektor 25 angeordnetes drittes Filter 17. Die Messung der Intensität der Leuchtdiode 10 geschieht hierbei vorzugsweise ohne Banknote, d.h. es befindet sich keine Banknote vor dem transparenten räumlichen Teilbereich 21. Hierdurch wird ausgeschlossen, daß gegebenenfalls von der Banknote remittiertes, d.h. diffus reflektiertes, Licht auf den Monitordetektor 25 trifft und die Messung der momentanen Helligkeit der Leuchtdiode verfälscht.

Bevorzugterweise handelt es sich bei den verwendeten Detektoren um Photodioden. Der sowohl für das Anregungslicht als auch das Fluoreszenzlicht zumindest teilweise transparente räumliche Teilbereich 21 der Transportplatte 20 besteht im allgemeinen aus einem geeigneten Glasmaterial. Absorptionskanten typischer Glasmaterialien liegen unter 350 nm, so daß diese für Licht mit größeren Wellenlängen durchlässig sind. Zweites Filter 16 und drittes Filter 17 können wahlweise auch mit dem jeweiligen Detektor 12 bzw. 25 fest verbunden sein, z.B. auf diesen aufgedampft oder aufgeklebt sein.

Die Messung von Umgebungslicht und Fluoreszenzlicht kann hierbei bei jeder zu überprüfenden Banknote 11 mehrmals durchgeführt werden. Beispielsweise kann die Banknote 11 in einer Spurmessung geprüft werden, indem die Banknote am Teilbereich 21 der Transportplatte vorbei transportiert wird und in bestimmten Abständen jeweils vermessen wird. Typische Spurbreiten liegen bei etwa 6 mm, typische Abstände zwischen den Messungen bei etwa 2 mm. Die so erhaltenen Werte können dann gemittelt werden, wobei ein Mittelwert erzeugt wird, welcher ein Maß für das mittlere Fluoreszenzverhalten der Banknote 11 darstellt. Der Mittelwert kann z.B. durch arithmetische Mittelung der Werte ermittelt werden. Alternativ kann der Mittelwert aus den einzelnen Werten aber auch durch den Einsatz eines sog. Medianfilters ermittelt werden, welches Spitzenwerte aus der Reihe der einzelnen Werte eliminiert und die Reihe dadurch "glättet".

Der Mittelwert kann dann mit dem vordefinierten Schwellenwert verglichen werden. Ist der Mittelwert größer als der Schwellenwert, so liegt ein Indiz für eine Fälschung vor.

Bei einer periodischen oder gepulsten Spannungsversorgung der Leuchtdiode 10 und einer Verstärkung des Ausgangssignals des Fluoreszenzdetektors 12 mit einem Lock-In-Verstärker erfolgt die Verminderung des Fluoreszenzlichts um die Anteile des Umgebungslichts automatisch, d.h. durch das Lock-In-Verfahren selbst, so daß sich eine gesonderte Messung des Umgebungslichts erübrigt.

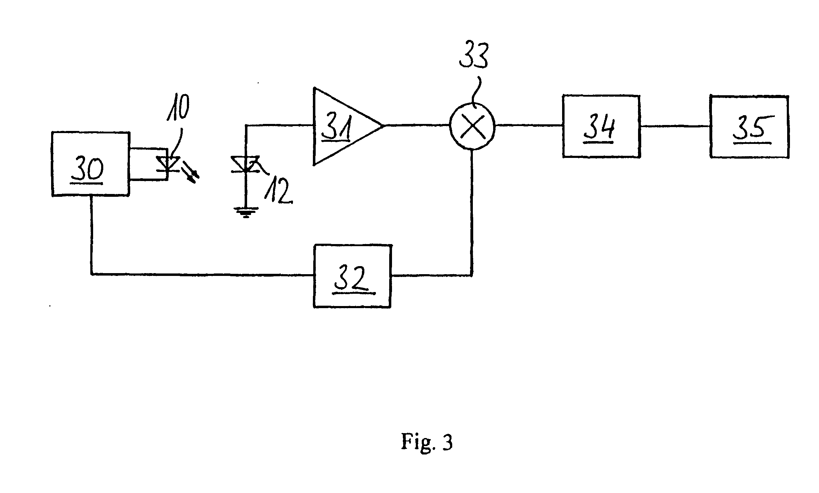

Figur 3 zeigt ein Prinzipschaltbild des erfindungsgemäß vorgesehenen Lock-In-Verstärkers in Verbindung mit der Leuchtdiode 10 und dem Fluoreszenzdetektor 12. Ein Frequenzgenerator 30 ist mit der Leuchtdiode 10 verbunden. Das durch Licht von der Leuchtdiode 10 angeregte Fluoreszenzlicht in der Banknote 11 (nicht dargestellt) wird von dem in diesem Beispiel als Photodiode ausgebildeten Fluoreszenzdetektor 12 detektiert. Das Ausgangssignal des Fluoreszenzdetektors 12 wird anschließend in einem Transimpedanzverstärker 31 verstärkt und zusammen mit einem vom Frequenzgenerator 30 erzeugten und durch einen Phasenschieber 32 geleiteten Referenzsignal einem Synchrondemodulator 33 zugeführt. Das Ausgangssignal des Synchrondemodulators wird in einem Tiefpassfilter 34 gefiltert und kann zur weiteren Verarbeitung einem Analog-Digital-Wandler 35 zugeführt werden. Die erläuterte Prinzipschaltung kann im übrigen auch zur Bestimmung der Helligkeit der Leuchtdiode 10 mit Hilfe des Monitordetektors 25 eingesetzt werden. In diesem Falle wird anstelle des Fluoreszenzdetektors 12 einfach der Monitordetektor 25 an den Transimpedanzverstärker 31 angeschlossen oder geschaltet.

Bevorzugterweise wird das erfindungsgemäße Verfahren und gegebenenfalls deren Weiterbildungen an mehreren Stellen der Banknote wiederholt. Die Prüfung der Echtheit von Banknoten wird hierdurch noch sicherer und zuverlässiger als bei der Messung an lediglich einer Stelle auf der zu überprüfenden Banknote. Die das Fluoreszenzverhalten der Banknote an einzelnen Stellen charakterisierenden, korrigierten Meßwerte können dann gemittelt werden, um beispielsweise etwaige Verschmutzungseffekte an einzelnen Stellen der zu überprüfenden Banknote zu vermindern.

## Patentansprüche

1. Vorrichtung zur Echtheitsprüfung von Banknoten mit
- wenigstens einer Lichtquelle zur Emission von Licht, welches zur Anregung von Fluoreszenzlicht in einer zu überprüfenden Banknote (11) geeignet ist, die von einer Leuchtdiode (10) gebildet wird, die zur Emission von Licht ausgebildet ist, welches zumindest in einem spektralen Teilbereich ultraviolettes Licht enthält,
- wenigstens einem Fluoreszenzdetektor (12) zur Detektion des von der zu überprüfenden Banknote (11) emittierten Fluoreszenzlichts,
- einer Spannungsquelle zur Erzeugung einer Spannung mit einem periodischen zeitlichen Verlauf zur Spannungsversorgung der Leuchtdiode (10) **dadurch gekennzeichnet, daß**
- mindestens eine Verstärkungseinrichtung zur Verstärkung von Ausgangssignalen des Fluoreszenzdetektors (12) vorgesehen ist, wobei die Verstärkungseinrichtung als Lock-In-Verstärker ausgebildet ist.

2. Vorrichtung nach Anspruch 1, **dadurch gekennzeichnet, daß** die Leuchtdiode (10) ein Emissionsspektrum mit einem Maximum im ultravioletten Spektralbereich aufweist.

3. Vorrichtung nach einem der obenstehenden Ansprüche, **dadurch gekennzeichnet, daß**
- die Leuchtdiode (10) zur Emission von Licht ausgebildet ist, welches zur Anregung von Fluoreszenzlicht in einem nichtpunktförmigen Teilbereich der zu überprüfende Banknote (11) geeignet ist, und
- der Fluoreszenzdetektor (12) zur integralen Detektion des von der Banknote (11) emittierten Fluoreszenzlichts ausgebildet ist.

4. Vorrichtung nach einem der obenstehenden Ansprüche, **dadurch gekennzeichnet, daß** ein erstes Filter (15) zur Filterung des von der Leuchtdiode (10) emittierten Lichts vorgesehen ist, wobei das Filter (15) für einen zur Anregung von Fluoreszenzlicht in der zu überprüfenden Banknote (11) geeigneten spektralen Teilbereich des von der Leuchtdiode (10) emittierten Lichts durchlässig ist.

5. Vorrichtung nach einem der obenstehenden Ansprüche, **dadurch gekennzeichnet, daß** ein zweites Filter (16) zur Filterung des von der zu überprüfenden Banknote (11) emittierten und von dem Fluoreszenzdetektor (12) zu detektierenden Fluoreszenzlichts vorgesehen ist.

6. Vorrichtung nach einem der obenstehenden Ansprüche, **dadurch gekennzeichnet, daß** eine Transportplatte (20) vorgesehen ist, welche
- zwischen Leuchtdiode (10) und Fluoreszenzdetektor (12) einerseits und der zu überprüfenden Banknote (11) andererseits angeordnet ist, und
- zumindest einen räumlichen Teilbereich (21) aufweist, welcher zumindest für einen spektralen Teilbereich des von der Leuchtdiode (10) emittierten Lichts sowie zumindest für einen spektralen Teilbereich des von der zu überprüfenden Banknote (11) emittierten Fluoreszenzlichts durchlässig ist.

7. Vorrichtung nach einem der obenstehenden Ansprüche, **dadurch gekennzeichnet, daß** ein Monitordetektor (25) zur Detektion zumindest eines Teils des von der Leuchtdiode (10) emittierten Lichts vorgesehen ist.

8. Vorrichtung nach Anspruch 6 und 7, **dadurch gekennzeichnet, daß** Leuchtdiode (10), Monitordetektor (25) und Transportplatte (20) oder erstes Filter (15) so angeordnet sind, daß von der Leuchtdiode (10) emittiertes Licht an der Transportplatte (20) bzw. am ersten Filter (15) teilweise reflektiert wird und zum Monitordetektor (25) gelangt.

9. Vorrichtung nach einem der Ansprüche 7 oder 8, **dadurch gekennzeichnet, daß** ein drittes Filter (17) zur Filterung des von der Leuchtdiode (10) emittierten und an der Transportplatte (20) teilweise reflektierten und von dem Monitordetektor (25) zu detektierenden Lichts vorgesehen ist.

10. Vorrichtung nach einem der obenstehenden Ansprüche, **dadurch gekennzeichnet, daß** eine erste Blende (22) zur Kollimation des von der zu überprüfenden Banknote (11) emittierten Fluoreszenzlichts auf den Fluoreszenzdetektor (12) vorgesehen ist.

11. Vorrichtung nach einem der obenstehenden Ansprüche, **dadurch gekennzeichnet, daß** ein System (18) aus optischen Linsen zur Kollimation des von der zu überprüfenden Banknote (11) emittierten Fluoreszenzlichts auf den Fluoreszenzdetektor (12) vorgesehen ist.

12. Vorrichtung nach einem der Ansprüche 7 oder 8, **dadurch gekennzeichnet, daß** eine zweite Blende (23) zur Kollimation des von der Leuchtdiode (10) emittierten und an der Transportplatte (20) teilweise reflektieren Lichts auf den Monitordetektor (25) vorgesehen ist.

13. Vorrichtung nach einem der obenstehenden Ansprüche, **dadurch gekennzeichnet, daß** mindestens eine Verstärkungseinrichtung zur Verstärkung von Ausgangssignalen des Monitordetektors (25) vorgesehen ist, wobei die Verstärkungseinrichtung als Lock-In-Verstärker ausgebildet ist.

14. Verfahren zur Echtheitsprüfung von Banknoten, bei welchem eine zu überprüfende Banknote (11) mit ultraviolettem Licht einer Lichtquelle beleuchtet wird, von der zu überprüfenden Banknote (11) emittiertes sichtbares Fluoreszenzlicht mit einem Fluoreszenzdetektor (12) gemessen wird und das gemessene Fluoreszenzlicht mit einem vordefinierten Schwellenwert verglichen wird, mit folgenden Schritten:
a) Beleuchtung zumindest eines Teilbereichs der zu überprüfenden Banknote (11) mit von einer Leuchtdiode (10) emittiertem Licht, welches zumindest in einem spektralen Teilbereich ultraviolettes Licht enthält und zur Anregung von Fluoreszenzlicht in der zu überprüfenden Banknote (11) geeignet ist, Messung mit einem Fluoreszenzdetektor (12) und Erzeugung eines ersten Meßwertes,
b) Messung mit dem Fluoreszenzdetektor (12) bei abgeschalteter Beleuchtung und Erzeugung eines zweiten Meßwertes,
c) Korrektur des bei eingeschalteter Beleuchtung erzeugten ersten Meßwertes mit dem bei abgeschalteter Beleuchtung erzeugten zweiten Meßwert und
d) Vergleich des korrigierten Meßwertes mit einem vordefinierten Schwellenwert, wobei
das Ein- und Abschalten der Leuchtdiode (10) periodisch erfolgt, **dadurch gekennzeichnet, daß** die Korrektur des bei eingeschalteter Beleuchtung erzeugten ersten Meßwertes mit dem bei abgeschalteter Beleuchtung erzeugten zweiten Meßwert durch eine Lock-In-Verstärkung eines vom Fluoreszenzdetektor (12) erzeugten Ausgangssignals erfolgt.

15. Verfahren nach Anspruch 14, **dadurch gekennzeichnet, daß** die Korrektur des bei eingeschalteter Beleuchtung erzeugten ersten Meßwertes mit dem bei abgeschalteter Beleuchtung erzeugten zweiten Meßwert durch Subtraktion des zweiten Meßwertes vom ersten Meßwert erfolgt.

16. Verfahren nach Anspruch 14 oder 15, **dadurch gekennzeichnet, daß** der korrigierte Meßwert oder der Schwellenwert mit einem Korrekturwert K korrigiert wird, welcher die Änderung der Intensität des von der Leuchtdiode emittierten Lichts im Verlauf der Betriebsdauer der Leuchtdiode (10) berücksichtigt.

17. Verfahren nach Anspruch 16, **dadurch gekennzeichnet, daß**
- jeweils zu einem ersten und einem späteren zweiten Zeitpunkt bei eingeschalteter Leuchtdiode (10) und ohne Banknote (11) zumindest ein Teil des von der Leuchtdiode (10) emittierten Lichts mit einem Monitordetektor (25) gemessen wird, wobei jeweils ein zur Messung zum ersten und zweiten Zeitpunkt zugehöriger erster bzw. zweiter Monitorwert erzeugt wird, und
- der Korrekturwert K aus dem ersten und zweiten Monitorwert ermittelt wird.

18. Verfahren nach einem der Ansprüche 14 bis 17, **dadurch gekennzeichnet, daß** das Verfahren an mehreren Stellen der zu überprüfenden Banknote (11) durchgeführt wird.

19. Verfahren nach Anspruch 18, **dadurch gekennzeichnet, daß** die an mehreren Stellen der Banknote (11) gemessenen und korrigierten Meßwerte gemittelt werden und hierbei ein Mittelwert erzeugt wird, welcher mit dem Schwellenwert verglichen wird.

20. Verfahren nach einem der Ansprüche 14 bis 19, **dadurch gekennzeichnet, daß**
- bei eingeschalteter Leuchtdiode (10) von der Banknote (11) emittiertes Fluoreszenzlicht gemessen wird,
- bei abgeschalteter Leuchtdiode (10) von der Banknote (10) emittiertes Phosphoreszenzlicht gemessen wird und
- das gemessene Fluoreszenz- und Phosphoreszenzlicht der Banknote (11) zur Echtheitsprüfung herangezogen wird.

21. Verwendung der Vorrichtung zur Echtheitsprüfung von Banknoten nach einem der Ansprüche 1 bis 13, **dadurch gekennzeichnet, daß**
- bei eingeschalteter Leuchtdiode (10) von der Banknote (11) emittiertes Fluoreszenzlicht mit dem Fluoreszenzdetektor (12) gemessen wird,
- bei abgeschalteter Leuchtdiode (10) von der Banknote (10) emittiertes Phosphoreszenzlicht mit dem Fluoreszenzdetektor (12) gemessen wird und
- das gemessene Fluoreszenz- und Phosphoreszenzlicht der Banknote (11) zur Echtheitsprüfung herangezogen wird.

## Claims

1. An apparatus for testing the authenticity of bank notes having
- at least one light source for emitting light suitable for exciting fluorescent light in a bank note to be checked (11), which is constituted by a light-emitting diode (10) formed to emit light containing ultraviolet light at least in a partial spectral region,
- at least one fluorescence detector (12) for detecting the fluorescent light emitted by the bank note to be checked (11),
- a voltage source for generating a voltage with periodic time behavior for supplying power to the light-emitting diode (10),
**characterized in that**
- at least one amplifying device for amplifying output signals from the fluorescence detector (12) is provided, the amplifying device being formed as a lock-in amplifier.

2. An apparatus according to claim 1, **characterized in that** the light-emitting diode (10) has an emission spectrum with a peak in the ultraviolet spectral region.

3. An apparatus according to either of the above claims, **characterized in that**
- the light-emitting diode (10) is formed to emit light suitable for exciting fluorescent light in a non-point-shaped partial area of the bank note to be checked (11), and
- the fluorescence detector (12) is formed for integral detection of the fluorescent light emitted by the bank note (11).

4. An apparatus according to any of the above claims, **characterized in that** a first filter (15) is provided for filtering the light emitted by the light-emitting diode (10), the filter (15) being permeable to a partial spectral region of the light emitted by the light-emitting diode (10) and suitable for exciting fluorescent light in the bank note to be checked (11).

5. An apparatus according to any of the above claims, **characterized in that** a second filter (16) is provided for filtering the fluorescent light emitted by the bank note to be checked (11) and to be detected by the fluorescence detector (12).

6. An apparatus according to any of the above claims, **characterized in that** a transport plate (20) is provided which
- is disposed between light-emitting diode (10) and fluorescence detector (12), on the one hand, and the bank note to be checked (11), on the other hand, and
- has at least one three-dimensional partial area (21) which is permeable at least to a partial spectral region of the light emitted by the light-emitting diode (10) and at least to a partial spectral region of the fluorescent light emitted by the bank note to be checked (11).

7. An apparatus according to any of the above claims, **characterized in that** a monitor detector (25) is provided for detecting at least part of the light emitted by the light-emitting diode (10).

8. An apparatus according to claims 6 and 7, **characterized in that** light-emitting diode (10), monitor detector (25) and transport plate (20) or first filter (15) are disposed such that light emitted by the light-emitting diode (10) is partly reflected on the transport plate (20) or the first filter (15) and reaches the monitor detector (25).

9. An apparatus according to either of claims 7 and 8, **characterized in that** a third filter (17) is provided for filtering the light emitted by the light-emitting diode (10) and partly reflected on the transport plate (20) and to be detected by the monitor detector (25).

10. An apparatus according to any of the above claims, **characterized in that** a first screen (22) is provided for collimating the fluorescent light emitted by the bank note to be checked (11) onto the fluorescence detector (12).

11. An apparatus according to any of the above claims, **characterized in that** a system (18) of optical lenses is provided for collimating the fluorescent light emitted by the bank note to be checked (11) onto the fluorescence detector (12).

12. An apparatus according to either of claims 7 and 8, **characterized in that** a second screen (23) is provided for collimating the light emitted by the light-emitting diode (10) and partly reflected on the transport plate (20) onto the monitor detector (25).

13. An apparatus according to any of the above claims, **characterized in that** at least one amplifying device is provided for amplifying output signals from the monitor detector (25), the amplifying device being formed as a lock-in amplifier.

14. A method for testing the authenticity of bank notes wherein a bank note to be checked (11) is illuminated with ultraviolet light from a light source, visible fluorescent light emitted by the bank note to be checked (11) is measured with a fluorescence detector (12), and the measured fluorescent light is compared with a predefined threshold value, having the following steps:
a) illuminating at least a partial area of the bank note to be checked (11) with light emitted by a light-emitting diode (10), said light containing ultraviolet light at least in a partial spectral region and being suitable for exciting fluorescent light in the bank note to be checked (11), measuring with a fluorescence detector (12) and generating a first measured value,
b) measuring with the fluorescence detector (12) with the illumination switched off and generating a second measured value,
c) correcting the first measured value generated with the illumination switched on with the second measured value generated with the illumination switched off, and
d) comparing the corrected measured value with a predefined threshold value,
whereby the light-emitting diode (10) is switched on and off periodically, **characterized in that** the first measured value generated with the illumination switched on is corrected with the second measured value generated with the ilillumination switched off by lock-in amplification of an output signal generated by the fluorescence detector (12).

15. A method according to claim 14, **characterized in that** the first measured value generated with the illumination switched on is corrected with the second measured value generated with the illumination switched off by subtracting the second measured value from the first measured value.

16. A method according to claim 14 or 15, **characterized in that** the corrected measured value or the threshold value is corrected with correction value *K* which takes account of the change of intensity in the light emitted by the light-emitting diode in the course of the operating lifetime of the light-emitting diode (10).

17. A method according to claim 16, **characterized by** the steps of
- measuring at least part of the light emitted by the light-emitting diode (10) with a monitor detector (25) at a first and a later second time with the light-emitting diode (10) switched on and without a bank note (11) in each case, thereby generating first and second monitor values associated with the measurements at the first and second times in each case, and
- determining correction value *K* from the first and second monitor values.

18. A method according to any of claims 14 to 17, **characterized in that** the method is performed at several places on the bank note to be checked (11).

19. A method according to claim 18, **characterized in that** the measured values measured at several places on the bank note (11) and corrected are averaged, thereby generating a mean value that is compared with the threshold value.

20. A method according to any of claims 14 to 19, **characterized by**
- measuring fluorescent light emitted by the bank note (11) with the light-emitting diode (10) switched on,
- measuring phosphorescent light emitted by the bank note (10) with the light-emitting diode (10) switched off, and
- using the measured fluorescent and phosphorescent light of the bank note (11) for authenticity testing.

21. Use of the apparatus for testing the authenticity of bank notes according to any of claims 1 to 13, **characterized by** the steps of
- measuring fluorescent light emitted by the bank note (11) with the fluorescence detector (12) with the light-emitting diode (10) switched on,
- measuring phosphorescent light emitted by the bank note (10) with the fluorescence detector (12) with the light-emitting diode (10) switched off, and
- using the measured fluorescent and phosphorescent light of the bank note (11) for authenticity testing.

## Revendications

1. Dispositif pour vérifier l'authenticité de billets de banque :
- avec au moins une source de lumière pour l'émission de lumière, laquelle est appropriée pour l'activation de lumière fluorescente dans un billet de banque à contrôler (11), cette source de lumière étant formée par une diode électroluminescente (10) configurée pour émettre de la lumière qui contient au moins dans une zone spectrale partielle de la lumière ultraviolette ; et
- avec au moins un détecteur de fluorescence (12) pour la détection de la lumière fluorescente émise par le billet de banque à contrôler (11) ; et
- avec une source de tension pour générer une tension avec une évolution périodique chronologique pour alimenter en tension la diode électroluminescente (10),
**caractérisé en ce que** :
- au moins un dispositif d'amplification pour l'amplification de signaux de sortie du détecteur de fluorescence (12) est prévu, le dispositif d'amplification étant configuré comme amplificateur à démodulation synchrone.

2. Dispositif selon la revendication 1, **caractérisé en ce que** la diode électroluminescente (10) comprend un spectre d'émission avec un maximum dans la zone spectrale ultraviolette.

3. Dispositif selon l'une des revendications précédentes, **caractérisé en ce que** :
- la diode électroluminescente (10) est configurée pour l'émission de lumière qui est appropriée pour l'activation de lumière fluorescente dans une zone partielle qui n'est pas en forme de points du billet de banque à contrôler (11);
**et en ce que :**
- le détecteur de fluorescence (12) est configuré pour la détection intégrale de la lumière fluorescente émise par le billet de banque (11).

4. Dispositif selon l'une des revendications précédentes, **caractérisé en ce qu'**un premier filtre (15) servant à filtrer la lumière émise par la diode électroluminescente (10) est prévu, le filtre (15) étant perméable pour une zone spectrale partielle de la lumière émise par la diode électroluminescente (10) qui est appropriée pour l'activation de lumière fluorescente dans le billet de banque à contrôler (11).

5. Dispositif selon l'une des revendications précédentes, **caractérisé en ce qu'**un deuxième filtre (16) servant à filtrer la lumière fluorescente émise par le billet de banque à contrôler (11) et qui doit être détectée par le détecteur de fluorescence (12) est prévu.

6. Dispositif selon l'une des revendications précédentes, **caractérisé en ce qu'**il est prévu une platine de transport (20) qui :
- est disposée entre la diode électroluminescente (10) et le détecteur de fluorescence (12) d'une part et le billet de banque à contrôler (11) d'autre part ;
et qui :
- comprend au moins une zone spatiale partielle (21) qui est perméable au moins pour une zone spectrale partielle de la lumière émise par la diode électroluminescente (10) ainsi qu'au moins pour une zone spectrale partielle de la lumière fluorescente émise par le billet de banque à contrôler (11).

7. Dispositif selon l'une des revendications précédentes, **caractérisé en ce qu'**un détecteur de surveillance (25) pour la détection au moins d'une partie de la lumière émise par la diode électroluminescente (10) est prévu.

8. Dispositif selon les revendications 6 et 7, **caractérisé en ce que** la diode électroluminescente (10), le détecteur de surveillance (25) et la platine de transport (20) ou le premier filtre (15) sont disposés de telle façon que de la lumière émise par la diode électroluminescente (10) soit partiellement réfléchie sur la platine de transport (20) ou sur le premier filtre (15) et arrive au détecteur de surveillance (25).

9. Dispositif selon l'une des revendications 7 ou 8, **caractérisé en ce qu'**un troisième filtre (17) pour filtrer la lumière émise par la diode électroluminescente (10), réfléchie partiellement sur la platine de transport (20) et à détecter par le détecteur de surveillance (25) est prévu.

10. Dispositif selon l'une des revendications précédentes, **caractérisé en ce qu'**un premier diaphragme (22) assurant la collimation sur le détecteur de fluorescence (12) de la lumière fluorescente émise par le billet de banque à contrôler (11) est prévu.

11. Dispositif selon l'une des revendications précédentes, **caractérisé en ce qu'**un système (18) composé de lentilles optiques pour assurer la collimation sur le détecteur de fluorescence (12) de la lumière fluorescente émise par le billet de banque à contrôler (11) est prévu.

12. Dispositif selon l'une des revendications 7 ou 8, **caractérisé en ce qu'**un deuxième diaphragme (23) assurant la collimation sur le détecteur de surveillance (25) de la lumière émise par la diode électroluminescente (10) et partiellement réfléchie sur la platine de transport (20) est prévu.

13. Dispositif selon l'une des revendications précédentes, **caractérisé en ce qu'**au moins un dispositif d'amplification pour amplifier des signaux de sortie du détecteur de surveillance (25) est prévu, le dispositif d'amplification étant configuré comme amplificateur à démodulation synchrone.

14. Procédé pour vérifier l'authenticité de billets de banque, avec lequel un billet de banque à contrôler (11) est exposé à une lumière ultraviolette provenant d'une source de lumière, une lumière fluorescente visible émise par le billet de banque à contrôler (11) est mesurée avec un détecteur de fluorescence (12) et la lumière fluorescente mesurée est comparée avec une valeur de seuil prédéterminée, avec les étapes suivantes :
a) Projection au moins sur une zone partielle du billet de banque à contrôler (11) d'une lumière émise par une diode électroluminescente (10), qui contient au moins dans une zone spectrale partielle de la lumière ultraviolette et qui est appropriée pour l'activation de lumière fluorescente dans le billet de banque à contrôler (11), mesure avec un détecteur de fluorescence (12) et constitution d'une première valeur de mesure,
b) Mesure avec le détecteur de fluorescence (12) alors que la projection de lumière est arrêtée et constitution d'une deuxième valeur de mesure,
c) Correction de la première valeur de mesure constituée lorsque la projection de lumière est en marche au moyen de la deuxième valeur de mesure constituée lorsque la projection de lumière est arrêtée et
d) Comparaison de la valeur de mesure corrigée avec une valeur de seuil prédéterminée, la mise en marche et l'arrêt de la diode électroluminescente (10) ayant lieu périodiquement,
**caractérisé en ce que** la correction de la première valeur de mesure constituée avec la projection de lumière en marche au moyen de la deuxième valeur de mesure constituée avec la projection de lumière arrêtée a lieu à l'aide d'une amplification à démodulation synchrone d'un signal de sortie généré par le détecteur de fluorescence (12).

15. Procédé selon la revendication 14, **caractérisé en ce que** la correction de la première valeur de mesure constituée avec la projection de lumière en marche au moyen de la deuxième valeur de mesure constituée avec la projection de lumière arrêtée a lieu en soustrayant la deuxième valeur de mesure de la première valeur de mesure.

16. Procédé selon la revendication 14 ou 15, **caractérisé en ce que** la valeur de mesure corrigée ou la valeur de seuil est corrigée avec une valeur de correction K qui tient compte de modification de l'intensité de la lumière émise par la diode électroluminescente au cours de la durée de fonctionnement de la diode électroluminescente (10).

17. Procédé selon la revendication 16, **caractérisé en ce que** :
- respectivement à un premier moment et à un deuxième moment ultérieur, la diode électroluminescente (10) étant allumée et sans la présence d'un billet de banque (11), au moins une partie de la lumière émise par la diode électroluminescente (10) est mesurée avec un détecteur de surveillance (25), respectivement une première ou une deuxième valeur de surveillance associée pour la mesure lors du premier et lors du deuxième moment étant générée ;
**et en ce que :**
- la valeur de correction K est déterminée à partir de la première et de la deuxième valeur de surveillance.

18. Procédé selon l'une des revendications 14 à 17, **caractérisé en ce que** le procédé est réalisé à plusieurs endroits du billet de banque à contrôler (11).

19. Procédé selon la revendication 18, **caractérisé en ce qu'**une moyenne est calculée à partir des valeurs de mesure mesurées à plusieurs endroits du billet de banque (11) et corrigées et qu'une valeur moyenne en est tirée, laquelle est comparée avec la valeur de seuil.

20. Procédé selon l'une des revendications 14 à 19, **caractérisé en ce que** :
- de la lumière fluorescente émise par le billet de banque (11) lorsque la diode électroluminescente (10) est en marche est mesurée,
- la lumière phosphorescente émise par le billet de banque (11) lorsque la diode électroluminescente (10) est arrêtée est mesurée ; et
- la lumière fluorescente et la lumière phosphorescente du billet de banque (11) qui sont mesurées sont utilisées pour le contrôle de l'authenticité.

21. Utilisation du dispositif pour vérifier l'authenticité de billets de banque selon l'une des revendications 1 à 13, **caractérisée en ce que** :
- de la lumière fluorescente émise par le billet de banque (11) lorsque la diode électroluminescente (10) est en marche est mesurée avec le détecteur de fluorescence (12) ,
- **en ce que** de la lumière phosphorescente émise par le billet de banque (11) lorsque la diode électroluminescente (10) est arrêtée est mesurée avec le détecteur de fluorescence (12) et
- **en ce que** la lumière fluorescente et la lumière phosphorescente du billet de banque (11) qui sont mesurées sont utilisées pour le contrôle de l'authenticité.
